# EUROPEAN PATENT SPECIFICATION

(11) **EP 3 918 176 B1**
(45) Date of publication and mention of the grant of the patent: **08.10.2025**
(21) Application number: 19704233.6
(22) Date of filing: 30.01.2019
(51) Int. Cl.: E21B 3/00, E02F 3/43

(54) **A MINING MACHINE ADAPTED FOR EXTRACTING MATERIAL FROM A DEPOSIT, AND METHOD FOR CONTROL THEREOF**
ABBAUMASCHINE ZUR MATERIALEXTRAKTION AUS EINER ABLAGERUNG UND VERFAHREN ZUR STEUERUNG DAVON
MACHINE D'EXPLOITATION MINIÈRE CONÇUE POUR EXTRAIRE DU MATÉRIAU D'UN DÉPÔT, ET SON PROCÉDÉ DE COMMANDE

(43) Date of publication of application: 08.12.2021
(73) Proprietor: Sandvik Mining and Construction G.m.b.H., 8740 Zeltweg (AT)
(72) Inventor: BURGSTEINER, Uwe, 8740 Zeltweg (AT); LAMMER, Christopher, 8740 Zeltweg (AT)
(74) Representative: Sandvik
(86) International application number: PCT/EP2019/052226
(87) International publication number: WO 2020/156652

(56) References cited:
- EP-A1- 2 446 091
- EP-B1- 2 446 091
- GB-A- 2 542 251
- US-A1- 2018 252 103

## Description

### Technical field

The present disclosure relates to mining machines adapted for extraction of material from a deposit and methods for controlling operation of such mining machines.

### Background

Mining machines are used for obtaining material, such as minerals or coal, within mines. Such machines often include a chassis, a boom and a cutting drum, where the boom is movably attached to the chassis, and is arranged to hold the cutting drum.

Operation of the boom and cutting drum is often performed in cutting cycles. Such cycles include a series of movements for cutting and collecting material, which may include for example sumping in to the wall, shearing upwards or downwards, or sideways depending on the type of mining machine, and sumping out from the wall. Mining machines are often equipped with sensors and control systems which enable automation of the cutting cycle functionality.

GB2542251 describes a system and method for monitoring extraction height and volume of material extracted for a mining machine. The method includes determining a cut start time and a cut end time; and storing, in a memory, the cut start and end time, and the boom height and power consumption data. The method further includes adjusting the operation of the mining machine based on the cut start and end time, and the boom height and power consumption data.

US2018252103 describes a machine including a gathering head and a cutting implement, with the gathering head and cutting implement having overlapping ranges of motion. A positioning system of the machine includes a control device configured to prevent miscoordination of the gathering head and cutting implement by controlling a position of the gathering head based upon a state of progress of the cutting implement in a cutting cycle.

Currently, the operator of a mining machine is usually given the choice between two machine-predefined cutting paths for controlling an automatic cutting operation. A cutting path describes the movements of the boom and the positions of the cutting drum, which define an automatic cutting cycle. However, these two machine-predefined cutting paths are often not enough to cater to the specific needs of all customers since each mining site is subject to different geological conditions. When a customized cutting path is required, personnel with special skills in computing are required. These personnel will need to travel to the mining site to perform an update of the mining machine control system software. The updated software includes a new set of machine-predefined cutting paths.

Mining sites are often situated in rural areas. Further, the mining machines are often located deep down in underground mines. Consequently, it is not practical for such personnel to travel on-site for updates when a new cutting path is required.

Additionally, the geology may differ between different mining sites, thereby requiring different cutting processes. Today, there is not a single specific automatic cutting cycle which is suitable for all kinds of mining sites.

There is therefore a need to provide new mining machines and methods which overcome at least part of the above mentioned drawbacks.

### Summary

It is therefore an object of the present invention to overcome at least some of the above mentioned drawbacks, and to provide an improved mining machine and/or an improved method for controlling operation of a mining machine using cutting paths.

This and other objects are achieved by means of a mining machine and a method as defined in the appended independent claims. Other embodiments are defined by the dependent claims.

According to some embodiments of the present disclosure, there is provided a mining machine adapted for extracting of material from a deposit. Such material may for example be different types of rock, ore, salt, or coal. The mining machine comprises a data handling unit and a control unit. The data handling unit is adapted to receive a data file representative of a user-defined cutting path from an external storage medium. The data handling unit is further adapted to send data corresponding to a cutting path selected among the user-defined cutting path and one or more machine-predefined cutting paths to the control unit. The control unit is configured to control operation of the mining machine using an automatic cutting cycle in accordance with the selected cutting path corresponding to the data received from the data handling unit.

According to the invention, the data handling unit is further configured to convert the received data file into data corresponding to the user-defined cutting path and being readable by the control unit. The converted data may then be used by the control unit for controlling operation of the mining machine with an automated cutting cycle specified by the cutting path.

The control unit and the data handling unit may in some embodiments be separate entities in communication with each other. Further, the control unit and the data handling unit may be part of a same entity, namely a software-based control system of the mining machine.

The embodiments of the present disclosure rely on the concept of a mining machine performing an automatic cutting cycle based on a cutting path. An automatic cutting cycle (or cutting sequence) includes a series of actions performed by (parts of) a mining machine, in order to cut material from an ore or rock face. The actions of the cutting cycle can be repeated for different positions of the mining machine to e.g. form a tunnel in a mine. A cutting path describes a manner of performing such a cutting cycle, particularly through the definition of speeds and directions of the movements of (parts of) the mining machine.

The embodiments of the present disclosure rely also on the capacity of the control system of the mining machine to load (import/read) a data file from an external storage medium and to convert such a data file to data providing a new cutting path available for selection by a user of the mining machine in addition to cutting paths already pre-installed in the mining machine (i.e. in addition to the machine-predefined cutting paths).

The embodiments of the present disclosure are therefore beneficial in that an increased flexibility in operation of the mining machine is provided.

In some embodiments, the mining machine may further comprise a boom (which may also be referred to as cutting boom, arm or jig) and a cutting drum (which may also be referred to as cutter or cutting head). The boom may, at a first end, be pivotally mounted at a main frame of the mining machine. The cutting drum may be rotatably mounted at a second end of the boom. In these embodiments, an automatic cutting cycle would be carried out by the boom and the cutting drum. The movements of the boom and the positions of the cutting drum define a cutting path.

The cutting path may be defined in the data file by a sequence of point elements, where each point element includes information defining at least a position for the cutting drum and a motion mode for the boom. The position is for example a position relative to the mining machine for the cutting drum to reach. A motion mode may define the movement of the boom such as e.g. the direction and the speed of the boom.

The sequence of the positions of the cutting drum together with segment lines joining these positions define a trajectory of the cutting drum that is obtained from a cutting path. The cutting path may include additional information on how the trajectory is to be achieved.

A user-defined cutting path may for example be created by a user at a software-based client computer. The user is not required to have any special training in computing. On the other hand, a machine-predefined cutting path is created by personnel with significant computing skills, as a part of the software of the control system. These machine-predefined cutting paths are already defined upon delivery of the mining machine, and can only be changed through a substantial software update of the control system of the mining machine.

Motion modes may be of different types, and may be classified according to different code names corresponding to a particular movement. By way of example, the motion modes may be called normal, fast or sump-in. Normal and fast modes may describe the speed of movement of the boom. Sumping in may refer to the act of cutting, horizontally, into the rock surface. Sump-in points may block vertical movement, only allowing sumping in or out. Vertical or lateral movement of the boom may also be referred to as shearing.

Rock or ore consist of different compositions of minerals or mineraloids. Different compositions can result in different hardness, which means that the approach for cutting the rock might have to be altered. In particular, the sump-in process may have to be adapted, sumping in a longer or shorter distance depending on the hardness of the rock. Specifying a cutting path with an appropriate sump-in distance is a way of adapting the material extraction process to the present situation. A user of the mining machine, and/or a geologist, already based at a mine where the mining machine is used may therefore recognize the need of a specific cutting path adapted to a particular geological condition.

An aspect of the present disclosure relates therefore also to improved creation and handling of cutting paths. For this purpose, a computer program allowing a user (or operator) to define a cutting path for the mining machine may be provided. The computer program may e.g. be a windows-based computer program that can be installed in a client computer. The computer program may provide an interface with which the user may define the cutting path by creating point elements. The user may also specify the positions and other information related to the point elements, such as motion modes and point codes. All the information relating to the point elements may then be saved as a data file representing the user-defined cutting path.

The improved mining machine may have a software-based control system including the data handling unit and the control unit. For the purpose of improved handling of cutting paths, the data handling unit may be adapted to read a received data file representing a user-defined cutting path. It may further convert the file to data which is readable by the control unit as a cutting path. The control unit may then operate the boom and the cutting drum of the machine in accordance with this cutting path upon selection.

The reception of a data file from an external storage medium may be achieved using a physical connection to the storage medium, through for instance a USB connection or some other file transferring instrument, or by a wireless connection. However, considering the usual location of a mining machine, especially sub-surface locations, a physical connection may be preferable.

According to some embodiments, the control unit may further be configured to set at least one speed and at least one moving direction for the boom based on the data received from the data handling unit. Referring to a cutting path, the speed and moving direction may be based on the motion mode of a point element, and the position of the following point element in such a cutting path. The speed and moving direction of the boom may be updated for each point element within the present cutting path.

According to some embodiments, the user-defined cutting path defined in the data file may further comprise at least one interpolation point located between a first point element and a second point element. Positions of interpolation points are generated by the computer based on the positions of the previous point element (the first point element) and the following point element (the second point element). Similarly, the motion mode of the interpolation point defines a speed and a direction for the boom based on the motion modes of the previous point element and the following point element. Addition of such interpolation points may lead to a more continuous cutting path, which may in turn lead to a smoother trajectory. With the present embodiment, the precision of the movement between the point elements may be increased.

According to some embodiments, the data file may comprise a root element including a path element which may be identified at least by a unique cutting path identifier. The path element may comprise the number of point elements defining the cutting path, each point element defining a position of the cutting drum and a point code defining the motion mode.

According to some embodiments, the data file may be of XML-format.

According to some embodiments, the mining machine may be configured to operate within a cutting interval, and within a sump depth interval. The cutting interval may for example be a cutting height interval, or a cutting width interval. In the data file, the positions for the cutting drum may be defined relative to the cutting interval and the sump depth interval. In other words, the positions may be defined in a coordinate system which is relative to the size of the area in which the mining machine may operate. For example, a position may be partly described by a first coordinate along an axis which is parallel to the direction of travel of the mining machine, and defined in percentage of the maximum sump depth, and a second coordinate along an axis which intersects (for example is perpendicular to) the plane along the floor of the mine (i.e. the plane in which the machine is standing or in which a base of the main frame extends), defined in percentage of the maximum cutting height. Alternatively, for some other types of mining machines, the second coordinate may be defined in percentage of the maximum cutting width along an axis which is parallel (or at least approximately parallel) to the plane along the floor of the mine and which intersects (e.g. which is perpendicular to) the direction of travel of the mining machine.

The positions may be defined in the data file in absolute distances relative to a stationary part of the mining machine. For instance, a position may be defined by components or coordinates along the axes described above, but specified in e.g. centimeters, instead of relative to the limitations of the machine.

According to some embodiments, the data handling unit may be adapted to store the user-defined cutting path. Storing the user-defined cutting path may make it available for future selection, providing the operator with more cutting paths to choose from later on. Providing more cutting paths on-site may facilitate efficient operation in mines where for example the texture of the material to be excavated differs.

According to some embodiments, the mining machine may further comprise an input unit adapted to receive a user input indicating which cutting path has been selected. This input unit may for example be a human interface device (HID), such as a keyboard or a touch screen.

According to some embodiments, the mining machine may further comprise a display unit adapted to display a visualization of the selected cutting path. Further, the display may have other functions, for example for displaying the status of the present cutting cycle, or for presenting an overview of the available cutting paths.

According to a second aspect, a method for controlling operation of a mining machine adapted for extraction of material from a deposit is provided. The method comprises providing to a user a computer program for installation in a software-controlled client computer, the program being operable to allow the user to define a cutting path for the mining machine. The method further comprises storing the user-defined cutting path on a storage medium, and importing the user-defined cutting path to a software-based control system of the mining machine. The method further comprises allowing an operator to select a cutting path among the user-defined cutting path and one or more machine-predefined cutting paths stored in the software-based control system, and controlling the operation of the mining machine using an automatic cutting cycle in accordance with the selected cutting path.

According to the invention, the method further comprises converting the data file into data corresponding to the user-defined cutting path. This data is readable by the control system for controlling operation of the mining machine and is interpretable by the control system as a cutting path.

Providing a user with a computer program operable to allow the user to create a cutting path, and a mining machine capable of reading and interpreting a file relating to the user-defined cutting path as a cutting path, may permit the customer to create their own cutting paths on-site. Using the computer program and the improved mining machine, the user may adapt the cutting path to the present geological situation and mining process. A less complicated development process may lead to more people being able to create cutting paths, no longer requiring the intervention of people skilled in computing. Further, this method may shorten the time from the initial realization that a new cutting path is necessary, to the point when a new cutting path is being used to operate a machine. All the steps of the method may be performed on-site and using only local personnel.

The computer program installed in the customer's computer may for example be a windows-based stand-alone application.

According to some embodiments, the method may comprise storing the imported cutting path on the software-based control system. Storing the imported, user-defined, cutting path may make it available to the operator for future selection. It may be favorable to have the option of switching between a number of different user-defined cutting paths, for example in a mine in which the composition of the material to be excavated may vary.

According to some embodiments, the mining machine of the method may comprise a boom and a cutting drum, as described in relation to the first aspect of the present disclosure. The user-defined cutting path may be defined in the data file by a number of point elements. Each point element may define a position for the cutting drum and a motion mode for the boom. Controlling the operation of the mining machine may include setting a speed and a moving direction for the cutting boom based on the data converted from the data file. For example, the speed and direction may be updated for each point element within the cutting path.

The mining machine used in the method may be configured to operate within a cutting interval and within a sump depth interval. The cutting interval may for example be a cutting height interval or a cutting width interval. In the data file, the positions may be defined in relation to these intervals. For example, the positions may be defined by two coordinates, one along an axis parallel to the travel direction of the mining machine, and another one for example along an axis intersecting the plane parallel to the mine floor, or intersecting (for example being perpendicular to) the travel direction of the mining machine and parallel to (or at least approximately parallel to) the plane parallel to the mine floor. The distances along these axes, defining the positions, may be specified in e.g. percentages of the maximum sump-in depth and in percentages of the maximum cutting height or maximum cutting width, respectively. Further, the positions may also be defined in absolute values. For example, the positions may be defined using coordinates along the same axes as described above, but specified in e.g. centimeters or meters.

According to some embodiments, the method may further comprise the computer program generating an interpolation point between a first user-defined point element, and a second user-defined point element. A line connecting two successive points, comprising at least one interpolation point, may be called a segment line.

According to some embodiments, the method may further comprise displaying a visualization of the selected cutting path on a display unit.

It will be appreciated that the present disclosure relates also to the combination of the method according to the present embodiments with the features of the embodiments described with reference to the mining machine. For example, the data file may comprise a root element including a path element identified at least by a unique cutting path identifier. The path element may in turn comprise the number of point elements defining the cutting path. Each point element may include a position and a point code indicative of a motion mode. Further, the data file representative of the user-defined cutting path may be of XML-format.

According to a third aspect of the present disclosure, a storage medium holding a data file representative of a user-defined cutting path for operating a mining machine is provided. The data file may be readable by a software-based control system of the mining machine. The cutting path may then be available for selection among other cutting paths including one or more machine-predefined cutting paths which are stored within the software-based control system. The mining machine comprising the software-based control system may be operable using an automatic cutting cycle in accordance with the selected cutting path.

Although applications of the disclosure have been described with reference to a type of mining machine, the invention may be used in other applications or systems. The mining machine may also be referred to as an excavating equipment, which may for example include bolter miners, road headers, continuous miners or the like.

The embodiments of the present disclosure relate to all possible combinations of features recited in the claims. Additionally, it will be appreciated that all embodiments described with reference to the first aspect of the present disclosure may be combined with any embodiment described with reference to the second and third aspects of the present disclosure, and vice versa. The present disclosure covers therefore also such embodiments.

Further objects and advantages of the various embodiments of the present disclosure will be described below by means of exemplifying embodiments.

### Brief description of the drawings

Exemplifying embodiments will now be described in more detail, with reference to the following appended drawings:
Figure 1 shows a schematic view of a mining machine adapted to receive a file from an external storage medium in accordance with some embodiments;
Figure 2A is a side elevation view of a mining machine according to some embodiments;
Figure 2B is a side view of a mining machine, according to some embodiments, located in a mine tunnel;
Figure 3 illustrates an example of a cutting path in accordance with some embodiments;
Figure 4 shows an example of a data file structure representing a cutting path, in accordance with some embodiments;
Figure 5 shows a schematic view of a mining machine in accordance with some embodiments;
Figure 6 is a flow chart illustrating a method for controlling a mining machine in accordance with a user-defined cutting path, in accordance with an embodiment; and
Figure 7 is a flow chart illustrating a method for controlling a mining machine in accordance with a user-defined cutting path, in accordance with other embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

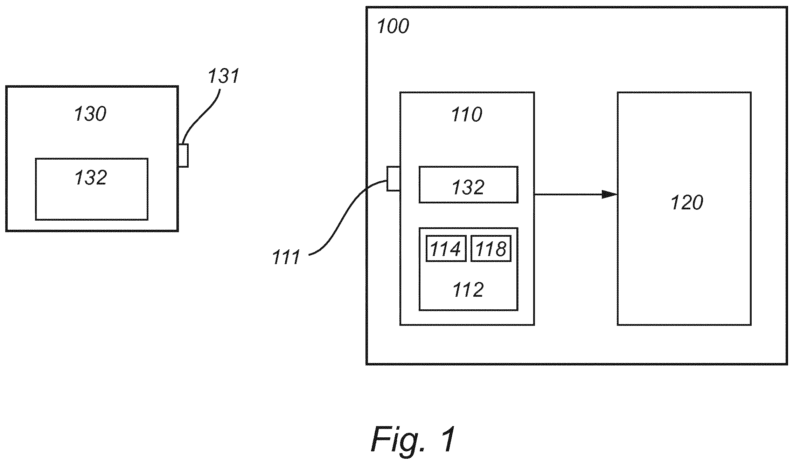

With reference to Figure 1, a mining machine 100 adapted to receive a data file 132 from an external storage medium 130 is described in accordance with some embodiments.

Figure 1 shows a mining machine 100 comprising a data handling unit 110 and a control unit 120. The data handling unit 110 and the control unit 120 may be separate entities, as illustrated in Figure 1. However, the data handling unit 110 and the control unit 120 may, according to some embodiments, not be separate entities, but rather be parts of the same entity. The data handling unit 110 and the control unit 120 may together form a control system (not denoted) of the mining machine 100.

The data handling unit 110 is in connection with the control unit 120 such that data can be transferred from the data handling unit 110 to the control unit 120. The data handling unit 110 is configured to receive a data file 132 through a connection unit or connector 111 at which an external storage medium 130 having a compatible connection unit or connector 131, may be connected. The transfer between these connection units may for example be performed using a direct connection, e.g. a universal serial bus (USB) connection (like for example via the use of a cable or a flash drive) or an Ethernet connection, or through a wireless connection.

The external storage medium 130 includes a data file 132 which corresponds to a user-defined cutting path. The data handling unit 110 is adapted to import the data file 132 from the external storage medium 130, through the connectors 111, 131.

According to some embodiments, the data handling unit 110 is further adapted to convert the data file 132 into data readable by the control unit 120. Further, the data handling unit may be adapted to generate a cutting path 114 based on the data file for display to, or at least for selection by, an operator of the mining machine.

The data handling unit 110 is further adapted to send data 112 corresponding to a selected cutting path to the control unit 120. The selected cutting path is chosen among the user-defined cutting path 114 and one or more machine-predefined cutting paths 118. The control unit 120 is in turn configured to control the mining machine 100 using an automated cutting cycle in accordance with the user-defined cutting path based on data received from the data handling unit 110.

According to an embodiment, the data handling unit 110 may be configured to store the user-defined cutting path.

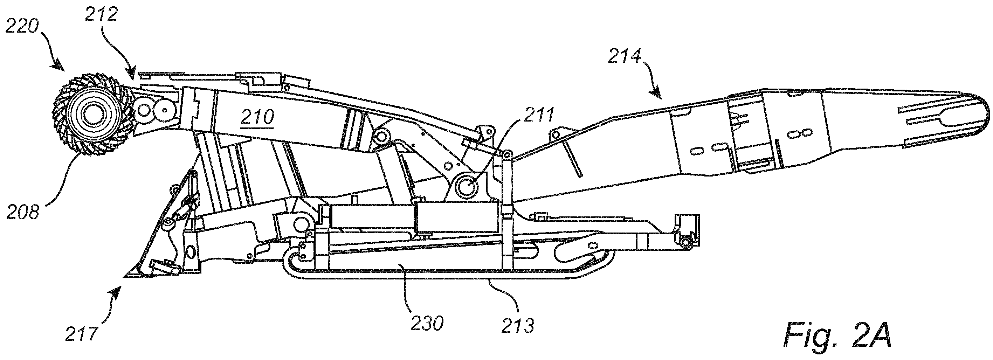

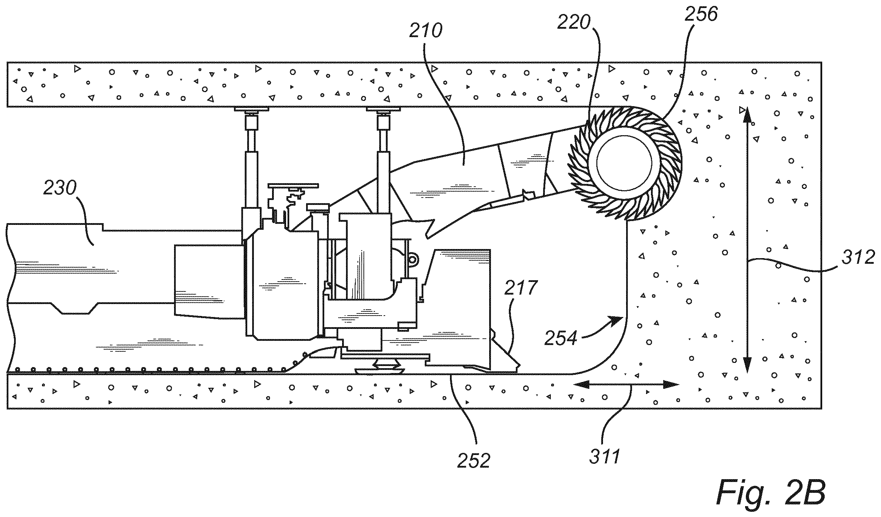

With reference to figures 2A and 2B, a mining machine will be described by way of example of a bolter miner being an electrically powered, track-mounted continuous mining machine designed to excavate roadways and install roof bolts simultaneously. Such mining machines comprise a cutting drum mounted on a hydraulically actuated frame to enable independent movement of the drum relative to the main frame and tracks. The machine also comprises roof bolters mounted on a stationary part of the main frame that can be operated throughout the cutting cycle.

Referring to figures 2A and 2B, the mining machine 200 comprises a frame 230 (which may be referred to as the main frame or chassis 230 of the mining machine), which supports a pair of endless driven tracks 213 for propelling the machine 200 over the ground and along a tunnel to advance forwardly through a deposit seam. A movable cutting boom 210 is pivotally mounted at one end 211 to the main frame 230. The boom 210 comprises a second end 212 mounting a cutting drum 220. Cutting bits 208 project radially from the drum 220 and are specifically adapted to cut into and dislodge the mineral material to be mined from the seam. The boom 210 and in particular the second end 212 is capable of being raised or lowered relative to the main frame 230. Raising and lowering the second end 212 allows the cutting drum 220 to cut the seam face 254, 256 over a varying height range 312 above the ground 252 of the mine tunnel. The second end 212 of the boom 210 is further capable of being moved backwards and forwards in the direction of travel of the mining machine 200. The machine 200 further comprises a gathering head 217 mounted at a forward end of the main frame 230. The head 217 is configured to collect material removed from the deposit seam by the cutting action of the cutting head 220. The cut material is transported rearwardly from the gathering head 217 via a conveyor, which is carried by a tail section 214.

Raising and lowering of the second end 212 and the cutting drum 220 may respectively be called shearing upwards and shearing downwards. Horizontal movement forwards, away from the main frame 230, of the second end 212 and the cutting drum 220 may be called sumping in. Horizontal movement backwards, towards the main frame 230, of the second end 212 and the cutting drum 220 may be called sumping out. A sequence of shearing and sumping movements, as well as movements combining shearing and sumping, is referred to as a cutting cycle or a cutting sequence. A cutting cycle can be used repeatedly to cut into and dislodge material from a seam. Current mining machines often comprise functionality allowing them to perform cutting cycles automatically.

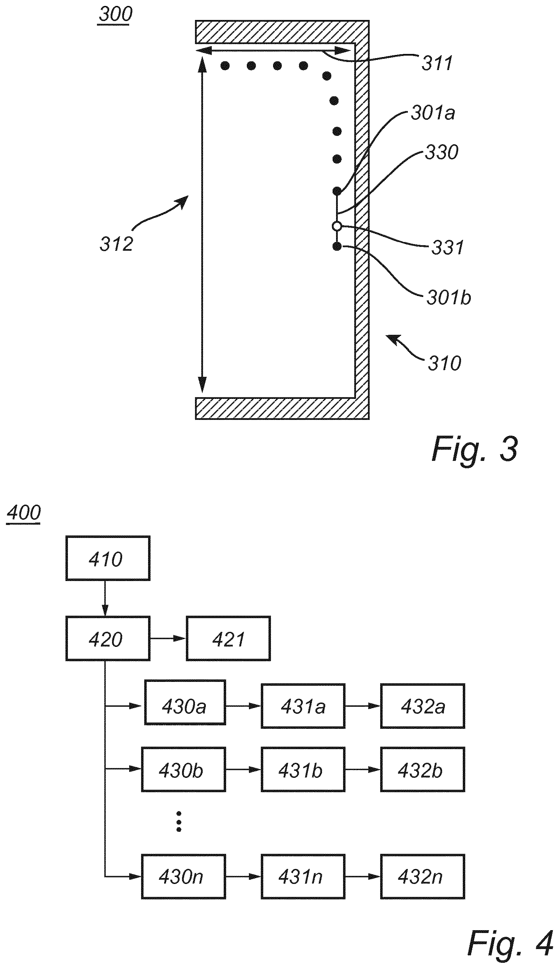

With reference to Figure 3, a cutting path will be described, in accordance with some embodiments.

A cutting path 300 is used to set parameters of an automatic cutting cycle. A cutting path 300 may be defined by a series of point elements 301a and 301b. Each point element 301a or 301b has a position for the cutting drum to reach, and a motion mode for the boom. Different point types exist which are defined by a point code. A motion mode relates to the movement of the boom 210. The control unit may for example set at least one speed and at least one moving direction for the boom based on the data 112 received from the data handling unit 110.

Examples of point types include: normal points, using a normal speed defined in the control system of the mining machine, and allowing for both sumping and shearing movements; speed points, for which the speed is increased with a pre-defined factor as compared to the normal speed, and both sumping and shearing movements are allowed; and sump-in points, in which the speed set for sump movements is used, and all shearing movements are blocked by the control system. The normal speed and the factor, with which the normal speed is increased for speed points, may be defined during final commissioning of the machine in a workshop. The speed and the factor may later be changed by the operator.

Further types of points may include start points, end points and computer generated interpolation points 331. The first point of the cutting path may automatically be given a point code corresponding to a start point. The last point of a cutting path may automatically be given a point code corresponding to an end point. In some embodiments, the user may be allowed to specify the motion modes for the start point and/or the end point.

Interpolation points 331 are computer-generated points added between a first point element 301a and a second point element 301b. The position of an interpolation point 331 is generated by the computer based on the position of the previous point element 301a and the following point element 301b. Similarly, the motion mode of the interpolation point 331 defines a speed and a direction for the boom 220 based on the motion modes of the previous point element 301a and the following point element 301b. Addition of such interpolation points may lead to a more continuous cutting path 300, which may in turn lead to a smoother trajectory, thereby increasing the precision of the movement towards the second point element 301b. A line between a first point element 301a and a second point element 301b, comprising at least one interpolation point 331 is called a segment line 330.

Point elements 301a and 301b forming the cutting path 300 may be placed within a maximum cutting profile 310. This maximum cutting profile 310 is, in this embodiment, limited by the maximum shearing height 312 and the maximum sump-in depth 311 of the boom 220, that is the maximum range in which the mining machine can cut from a given position. Alternatively, in other embodiments, the maximum cutting profile may be defined by a maximum shearing width, and a maximum sump-in depth. When a mining machine 200 is standing still, the maximum cutting profile 310 corresponds to the area which can be cut from that position. A cutting path 300 defines a manner to excavate the cutting profile 310 using an automatic cutting cycle.

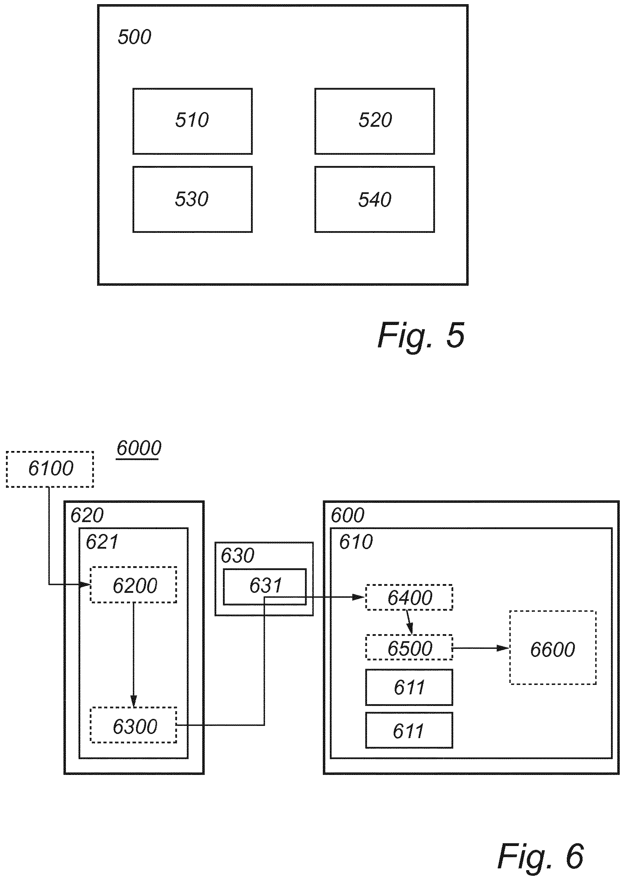

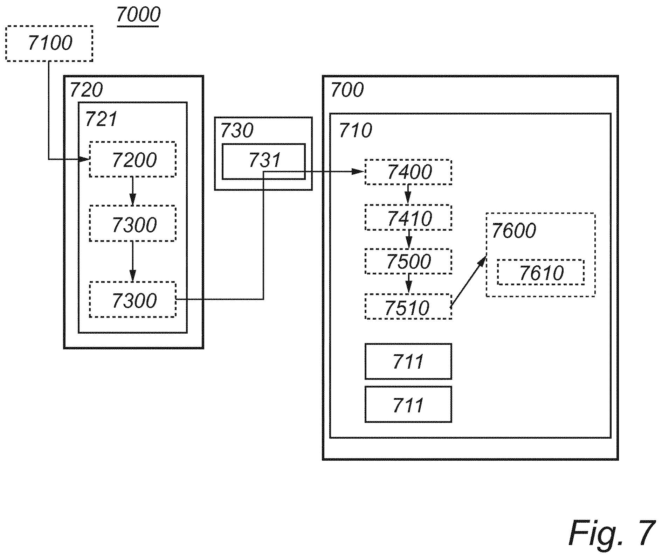

The interface of the computer program 621, 721 (which will be described in more detail with reference to Figures 6 and 7) may comprise a visualization similar to that shown in Figure 3. For instance, it may display a similar visualization of the point elements 301a and 301b, which the user may edit by e.g. dragging and dropping, and/or updating their related information. Further, the visualization may show the segment lines 330 connecting the points 301a and 301b, to provide a more comprehensible view of the cutting path 300. The cutting profile 310 may be visualized by a frame indicating the maximum cutting height 312 and the maximum sump-in depth 311. The values of the maximum cutting height 312 and the maximum sump-in depth 311 may be manually entered by the operator or automatically defined after selection by the user of the type of mining machine to be used. The computer program 621, 721 may further comprise for example a table, in which the information regarding each point element 301a and 301b is displayed. The table the user may be able to alter the information regarding each point element 301a and 301b directly within the table. Points may for example be added to the cutting path 300 in the computer program 621, 721 by drawing them in the visualization similar to Figure 3, or for example by adding them to the table.

For other embodiments, the cutting profile may be defined by a maximum cutting width and a maximum sump-in depth. In such embodiments, the maximum cutting height would be replaced with the maximum cutting width, as already described above in connection to the preceding embodiments.

Referring to Figure 4, a data file which can be obtained at a client computer and stored on a storage medium for further import to the control system of the mining machine will be described, in accordance with some embodiments.

A data file 400 representing a cutting path 300 may, according to some embodiments, comprise a root element 410 including a path element 420, which is identified at least by a unique path identifier 421. The path element comprises a plurality of point elements 430a-430n, which each comprises a position 431a-431n for the cutting drum and a point code 432a-432n.

According to an embodiment, the positions 431a-n may be defined in relation to the maximum shearing height 312 and the maximum sump-in depth 311 (as shown in Figure 3). The positions may be defined in a coordinate system which is relative to the size of the area in which the mining machine may operate, which is described by the cutting profile 310. For example, a position may be described by a coordinate along an axis which is parallel to the travelling direction of the mining machine 200, and a coordinate along an axis which intersects (e.g. being perpendicular to) the plane parallel to the mine floor 252. In such an embodiment, the coordinate of an axis parallel to the direction of travel of the mining machine 200 may be defined in percentage of the maximum sump-in depth 311. The coordinate of an axis intersecting the plane of the mine floor 252 may be defined in percentage of the maximum shearing height 312. Other embodiments may use a maximum shearing/cutting width instead of a maximum shearing/cutting height.

According to another embodiment, the positions 431a-n may be defined in absolute distances. In such an embodiment, the positions may include a coordinate along the axes described above. The scale of the coordinate system may be constant, and the position may be relative to e.g. a starting position for the cutter drum 220, or a certain stationary component of the mining machine 200.

According to some embodiments, the data file 400 may be of XML type.

Referring now to figure 5, further embodiments will be described.

Figure 5 illustrates an embodiment of a mining machine 500. The mining machine 500 comprises a data handling unit 510 and a control unit 520. It further comprises an input unit 530 and a display unit 540. The separation of the data handling unit 510, control unit 520, input unit 530 and display unit 540 is for illustrative purposes. They can be separate units, but may also be combined in different ways. The input unit 530 and/or the display unit 540 may for example be integral parts of the data handling unit 510. Although the figure shows both the display unit 540 and the input unit 530, embodiments including one or the other may be envisaged. Further, the display unit 540 and the input unit 530 may be part of the same unit, for example when using a touch screen.

The input unit 530 may be configured to receive an input from a user indicating a selection of a cutting path. The input unit may further be configured to communicate the input to the data handling unit 510. The data handling unit 510 may then be configured to send the data corresponding to the selected cutting path to the control unit 520 based on the received input. The input unit may for example be a pointer device, a keyboard or a touch screen.

The display unit 540 may be configured to display a visualization of the selected cutting path. It may further be configured to display for example the current state of the cutting cycle, or the presently available cutting paths.

Although described in different embodiments, the data handling unit 110 and the control unit 120 described with reference to Figure 1 may be equivalent to the data handling unit 510 and the control unit 520 with reference to Figure 5. Similarly, some or all of the mining machines 100, 200, 500, 600, 700 described with reference to figures 1, 2a, 2b, 5 and later with reference to figures 6 and 7, may also be equivalent to each other, despite being described in different embodiments.

With reference to figure 6, a method for controlling operation of a mining machine will be described.

Figure 6 shows a flow chart illustrating a method 6000 for controlling a mining machine 600. The method 6000 comprises providing 6100 to a user a computer program 621 for installation in a software-controlled client computer 620. The client computer 620 may for example be a windows-based client computer, in which case the computer program 621 may be a windows-based stand-alone application.

The method 6000 further comprises allowing 6200 the user to define a cutting path for the mining machine using the computer program 621. The computer program 621 may for example comprise functionality allowing the user to draw a cutting path 300 using a pointing device, e.g. a computer mouse. It may further comprise functionality allowing the user to edit the created cutting path 300, for example by editing the positions of point elements 301a and 301b of the created cutting path, or the motion modes connected to the point elements. The computer program 621 may further comprise an editable table including the information for each point element 301.

The method 6000 further comprises storing 6300 a data file 631 representative of the user-defined cutting path 300 to a storage medium 630. When storing, the user may have the option to provide a unique identifier 421 to the cutting path element 420, as described with reference to Figure 4. The user may also for example provide the cutting path element with a path name, making it distinguishable from other cutting paths. A path name may also signify the purpose of the path (e.g. being adapted to a specific type of ore or geological condition), which may facilitate the process of selecting a path later on.

For illustrative purposes, the storage medium 630 is shown as a separate entity. However, the storage medium 630 may be an integral part of the client computer 620. Using a storage medium integrated in the client computer may be preferable for example when using a portable client computer or wireless transfer of the data file. The data file 631 may be of XML-format.

Further, the method 6000 may comprise importing 6400 the data file 631 from the storage medium 630 to a software-based control system 610 of the mining machine 600. Moreover, the method 6000 comprises allowing 6500 the operator to select a cutting path among the user-defined cutting path corresponding to the data file 631, and one or more machine-predefined cutting paths 611 stored within the software-based control system 610. It is noted that although the user-defined cutting path is not illustrated in Figure 6, it is created during the process and is available for selection alongside the machine-predefined cutting paths 611.

The method further comprises operating 6600 the mining machine using an automatic cutting cycle in accordance with the selected cutting path. For instance, this may include adapting the speed and direction of boom movements in accordance with the information related to the point elements of the cutting path.

With reference to Figure 7, an embodiment of a method for controlling operation of a mining machine will be described.

Figure 7 shows a flow chart describing a method 7000 in accordance with another embodiment. The method 7000 comprises providing 7100 to a user a computer program 721 for installation in a software-controlled client computer 720. The method 7000 further includes allowing 7200 the user to define a cutting path for the mining machine using the computer program 721 and storing 7300 a data file 731 representative of the user-defined cutting path to a storage medium 730. Further, the method 7000 comprises importing 7400 the data file 731 from the storage medium 730 to a software-based control system 710 of the mining machine 700. The method 7000 also includes allowing 7500 the operator to select a cutting path among the user-defined cutting path represented by the data file 731, and one or more machine-predefined cutting paths 711 stored within the software-based control system 710, and operating 7600 the mining machine using an automatic cutting cycle in accordance with the selected cutting path.

According to an embodiment, in which the cutting path is defined by point elements, the method 7000 may further comprise the computer program 721 generating 7210 an interpolation point between a first point element and a second point element.

In accordance with an embodiment, the method 7000 may further comprise the step of storing 7410 the imported cutting path in the software-based control system 710.

According to some embodiments, the method 7000 may further comprise displaying 7510 a visualization of the selected cutting path on a display unit of the mining machine 700.

It will be appreciated that the present disclosure relates also to the combination of the method 6000 according to the embodiment shown in Figure 6 and the embodiments described in relation to Figure 7. Although Figure 7 illustrates a method 7000 comprising steps relating to several embodiments, these embodiments do not have to be simultaneously present. The present disclosure also covers embodiments comprising only one or a combination of some of these steps.

The person skilled in the art realizes that the present invention by no means is limited to the preferred embodiments described above. On the contrary, many modifications and variations are possible within the scope of the appended claims.

Although features and elements are described above in particular combinations, each feature and element can be used alone without the other features and elements or in various combinations with or without other features and elements.

Further, although applications of the mining machine have been described with reference to a mining machine, and specifically a bolter miner, as shown in Figure 2, the invention may be used in other applications or systems. For example, the invention could be used in systems including other excavation equipment, road headers, continuous miners or the like.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite articles "a" or "an" do not exclude a plurality. The mere fact that certain features are recited in mutually different dependent claims does not indicate that a combination of these features cannot be used to advantage.

## Claims

1. A mining machine (100, 500) adapted for extraction of material from a deposit, comprising:
a data handling unit (110, 510); and
a control unit (120, 520);
**characterised in that** said data handling unit is adapted to receive from an external storage medium (130) a data file (132) representative of a user-defined cutting path (114), and to send to the control unit data (112) corresponding to a cutting path selected among said user-defined cutting path and one or more machine-predefined cutting paths (118); and
wherein said control unit is configured to control operation of said mining machine using an automatic cutting cycle in accordance with the selected cutting path corresponding to the data received from the data handling unit;
wherein said data handling unit or said control unit is configured to convert said data file (132) into data (112) corresponding to the user-defined cutting path, the data being readable by said control unit for controlling operation of the mining machine.

2. The mining machine (200) of claim 1, further comprising:
a boom (210) pivotally mounted at a first end (211) at a frame (230) of said mining machine; and
a cutting drum (220) rotatably mounted at a second end (212) of said boom;
wherein a cutting path (300) is defined in said data file by a number of point elements (301a, 301b), wherein each point element defines at least a position for said cutting drum and a motion mode for said boom.

3. The mining machine of claim 2, wherein said user-defined cutting path (300) defined in said data file further comprises at least one computer-generated interpolation point (331) located between a first point element (301a) and a second point element (301b).

4. The mining machine of claim 2 or 3, wherein said data file (400) representative of a user-defined cutting path comprises a root element (410) including a path element (420) identified by at least a unique cutting path identifier (421), wherein said path element comprises said number of point elements (430a-n), each defining at least said position (431a-n) for said cutting drum and a point code (432a-n) defining said motion mode.

5. The mining machine of any of claims 2-4, wherein the control unit is configured to set at least one speed and at least one moving direction for said boom based on said data received from the data handling unit.

6. The mining machine of any of claims 2-5, wherein the mining machine is configured to operate within a cutting interval (312) and within a sump depth interval (311), and wherein said positions for the cutting drum, defining the cutting path, are defined in said data file relative to said cutting interval and to said sump depth interval.

7. The mining machine of any of claims 2-6, wherein said positions are defined in said data file in absolute values relative to a stationary component of the mining machine.

8. The mining machine of any of the previous claims, further comprising an input unit (530) adapted to receive a user input indicating the selected cutting path.

9. The mining machine of any of the previous claims, further comprising a display unit (540) adapted to display a visualization of the selected cutting path.

10. The mining machine of any of the previous claims, wherein the data handling unit is adapted to store the user-defined cutting path.

11. The mining machine of any of the previous claims, wherein said data file is of XML-format.

12. A method (6000,7000) for controlling operation of a mining machine (600,700) adapted for extraction of material from a deposit, the method comprising:
providing (6100,7100) to a user a computer program (621,721) for installation in a software-controlled client computer (620,720), said computer program being operable to allow the user to define a cutting path for the mining machine;
allowing (6200,7200) the user to define a cutting path for the mining machine using said computer program;
storing (6300,7300) a data file (631,731) representative of the user-defined cutting path on a storage medium (630,730);
importing (6400,7400) said data file from said storage medium to a software-based control system (610,710) of the mining machine;
converting said data file into data (112) corresponding to the user-defined cutting path, the data being readable by said control system for controlling operation of the mining machine;
allowing (6500,7500) the operator to select a cutting path among the user-defined cutting path and one or more machine-predefined cutting paths (611,711) stored in said software-based control system; and
operating (6600,7600) the mining machine using an automatic cutting cycle in accordance with the selected cutting path.

13. The method of claim 12, further comprising storing (7410) the imported cutting path on said software-based control system.

14. The method of any of claims 12-13, wherein said mining machine comprises a boom and a cutting drum, and wherein said user-defined cutting path is defined in said data file by a number of point elements, wherein each point element defines a position for said cutting drum and a motion mode for said boom.

15. The method of claim 14, further comprising the computer program generating (7210) at least one computer-generated interpolation point between at least one first user-defined point element and at least one second user-defined point element.

16. The method of claim 14 or 15, wherein said data file (400,631,731) representative of the user-defined cutting path comprises a root element (410) including a path element (420) identified by at least a unique cutting path identifier (421), wherein the path element comprises said number of point elements (430), each defining at least said position (431) for the cutting drum and a point code (432) defining said motion mode.

17. The method of any of claims 12-16, further comprising displaying (7510) on a display unit of the mining machine a visualization of the selected cutting path.

18. The method of any of claims 12-17, wherein said data file (400, 631, 731) representative of the user-defined cutting path is of XML-format.

19. A storage medium (630, 730) holding a data file (400, 631, 731) representative of a user-defined cutting path for operating a mining machine, according to any of claims 1 to 11, the data file being readable by a software-based control system of said mining machine for further conversion of the data file into the user-defined cutting path and for selection among other cutting paths including one or more machine-predefined cutting paths stored in said software-based control system, wherein said mining machine is operable using an automatic cutting cycle in accordance with the selected cutting path.

20. The storage medium of claim 19, wherein said data file comprises a root element including a path element identified by at least a unique cutting path identifier, wherein the path element comprises a number of point elements, each defining a position for a cutter drum of the mining machine and a point code defining a motion mode for a boom of the mining machine at which said cutter drum is mounted.

21. The storage medium of claim 19 or 20, wherein said data file is of XML-format.

## Patentansprüche

1. Bergbaumaschine (100, 500), die zur Extraktion von Material aus einer Lagerstätte geeignet ist, umfassend:
eine Datenhandhabungseinheit (110, 510); und
eine Steuereinheit (120, 520);
**dadurch gekennzeichnet, dass** die Datenhandhabungseinheit geeignet ist, von einem externen Speichermedium (130) eine Datendatei (132) zu empfangen, die für einen benutzerdefinierten Schneidpfad (114) repräsentativ ist, und der Steuereinheit Daten (112) zu senden, die einem Schneidpfad entsprechen, der aus dem benutzerdefinierten Schneidpfad und einem oder mehreren von der Maschine vordefinierten Schneidpfaden (118) ausgewählt ist; und
wobei die Steuereinheit dazu konfiguriert ist, den Betrieb der Bergbaumaschine unter Verwendung eines automatischen Schneidzyklus in Übereinstimmung mit dem ausgewählten Schneidpfad, der den von der Datenhandhabungseinheit empfangenen Daten entspricht, zu steuern;
wobei die Datenhandhabungseinheit oder die Steuereinheit dazu konfiguriert ist, die Datendatei (132) in Daten (112) umzuwandeln, die dem benutzerdefinierten Schneidpfad entsprechen, wobei die Daten von der Steuereinheit zum Steuern des Betriebs der Bergbaumaschine gelesen werden können.

2. Bergbaumaschine (200) nach Anspruch 1, weiter umfassend:
einen Ausleger (210), der an einem ersten Ende (211) schwenkbar an einem Rahmen (230) der Bergbaumaschine montiert ist; und
eine Schneidtrommel (220), die drehbar an einem zweiten Ende (212) des Auslegers montiert ist;
wobei ein Schneidpfad (300) in der Datendatei durch eine Anzahl von Punktelementen (301a, 301b) definiert ist, wobei jedes Punktelement mindestens eine Position für die Schneidtrommel und einen Bewegungsmodus für den Ausleger definiert.

3. Bergbaumaschine nach Anspruch 2, wobei der benutzerdefinierte Schneidpfad (300), der in der Datendatei definiert ist, weiter mindestens einen computergenerierten Interpolationspunkt (331) umfasst, der sich zwischen einem ersten Punktelement (301a) und einem zweiten Punktelement (301b) befindet.

4. Bergbaumaschine nach Anspruch 2 oder 3, wobei die Datendatei (400), die für einen benutzerdefinierten Schneidpfad repräsentativ ist, ein Wurzelelement (410) umfasst, das ein Pfadelement (420) beinhaltet, das durch mindestens eine eindeutige Schneidpfadkennung (421) identifiziert ist, wobei das Pfadelement die Anzahl von Punktelementen (430a-n) umfasst, die jeweils mindestens die Position (431a-n) für die Schneidtrommel und einen Punktcode (432a-n) definieren, welcher den Bewegungsmodus definiert.

5. Bergbaumaschine nach einem der Ansprüche 2-4, wobei die Steuereinheit dazu konfiguriert ist, auf Basis der von der Datenhandhabungseinheit empfangenen Daten mindestens eine Geschwindigkeit und mindestens eine Bewegungsrichtung für den Ausleger einzustellen.

6. Bergbaumaschine nach einem der Ansprüche 2-5, wobei die Bergbaumaschine dazu konfiguriert ist, innerhalb eines Schneidintervalls (312) und innerhalb eines Sumpftiefenintervalls (311) zu arbeiten, und wobei die Positionen für die Schneidtrommel, die den Schneidpfad definieren, in der Datendatei in Bezug auf das Schneidintervall und das Sumpftiefenintervall definiert sind.

7. Bergbaumaschine nach einem der Ansprüche 2-6, wobei die Positionen in der Datendatei in absoluten Werten in Bezug auf eine stationäre Komponente der Bergbaumaschine definiert sind.

8. Bergbaumaschine nach einem der vorstehenden Ansprüche, die weiter eine Eingabeeinheit (530) umfasst, die geeignet ist, eine Benutzereingabe zu empfangen, die den ausgewählten Schneidpfad angibt.

9. Bergbaumaschine nach einem der vorstehenden Ansprüche, die weiter eine Anzeigeeinheit (540) umfasst, die geeignet ist, eine Visualisierung des ausgewählten Schneidpfads anzuzeigen.

10. Bergbaumaschine nach einem der vorstehenden Ansprüche, wobei die Datenhandhabungseinheit geeignet ist, den benutzerdefinierten Schneidpfad zu speichern.

11. Bergbaumaschine nach einem der vorstehenden Ansprüche, wobei die Datendatei im XML-Format vorliegt.

12. Verfahren (6000,7000) zum Steuern des Betriebs einer Bergbaumaschine (600,700), die zur Extraktion von Material aus einer Lagerstätte geeignet ist, wobei das Verfahren umfasst:
Bereitstellen (6100,7100) eines Computerprogramms (621,721) für einen Benutzer zur Installation in einem softwaregesteuerten Client-Computer (620,720), wobei das Computerprogramm eingesetzt werden kann, um es dem Benutzer zu ermöglichen, einen Schneidpfad für die Bergbaumaschine zu definieren;
Ermöglichen (6200,7200), dass der Benutzer unter Verwendung des Computerprogramms einen Schneidpfad für die Bergbaumaschine definiert;
Speichern (6300,7300) einer Datendatei (631,731), die für den benutzerdefinierten Schneidpfad repräsentativ ist, auf einem Speichermedium (630,730);
Importieren (6400,7400) der Datendatei von dem Speichermedium in ein softwarebasiertes Steuersystem (610,710) der Bergbaumaschine;
Umwandeln der Datendatei in Daten (112), die dem benutzerdefinierten Schneidpfad entsprechen, wobei die Daten von dem Steuersystem zum Steuern des Betriebs der Bergbaumaschine gelesen werden können;
Ermöglichen (6500,7500), dass der Bediener einen Schneidpfad aus dem benutzerdefinierten Schneidpfad und einem oder mehreren von der Maschine vordefinierten Schneidpfaden (611,711), die in dem softwarebasierten Steuersystem gespeichert sind, auswählt; und
Betreiben (6600,7600) der Bergbaumaschine unter Verwendung eines automatischen Schneidzyklus in Übereinstimmung mit dem ausgewählten Schneidpfad.

13. Verfahren nach Anspruch 12, das weiter das Speichern (7410) des importierten Schneidpfads in dem softwarebasierten Steuersystem umfasst.

14. Verfahren nach einem der Ansprüche 12-13, wobei die Bergbaumaschine einen Ausleger und eine Schneidtrommel umfasst, und wobei der benutzerdefinierte Schneidpfad in der Datendatei durch eine Anzahl von Punktelementen definiert ist, wobei jedes Punktelement eine Position für die Schneidtrommel und einen Bewegungsmodus für den Ausleger definiert.

15. Verfahren nach Anspruch 14, das weiter das Generieren (7210) mindestens eines computergenerierten Interpolationspunkts zwischen mindestens einem ersten benutzerdefinierten Punktelement und mindestens einem zweiten benutzerdefinierten Punktelement durch das Computerprogramm umfasst.

16. Verfahren nach Anspruch 14 oder 15, wobei die Datendatei (400,631,731), die für den benutzerdefinierten Schneidpfad repräsentativ ist, ein Wurzelelement (410) umfasst, das ein Pfadelement (420) beinhaltet, das durch mindestens eine eindeutige Schneidpfadkennung (421) identifiziert ist, wobei das Pfadelement die Anzahl von Punktelementen (430) umfasst, die jeweils mindestens die Position (431) für die Schneidtrommel und einen Punktcode (432) definieren, welcher den Bewegungsmodus definiert.

17. Verfahren nach einem der Ansprüche 12-16, das weiter das Anzeigen (7510) einer Visualisierung des ausgewählten Schneidpfads auf einer Anzeigeeinheit der Bergbaumaschine umfasst.

18. Verfahren nach einem der Ansprüche 12-17, wobei die Datendatei (400, 631, 731), die für den benutzerdefinierten Schneidpfad repräsentativ ist, im XML-Format vorliegt.

19. Speichermedium (630, 730), das eine Datendatei (400, 631, 731) hält, die für einen benutzerdefinierten Schneidpfad zum Betreiben einer Bergbaumaschine nach einem der Ansprüche 1 bis 11 repräsentativ ist, wobei die Datendatei von einem softwarebasierten Steuersystem der Bergbaumaschine zur weiteren Umwandlung der Datendatei in den benutzerdefinierten Schneidpfad und zur Auswahl zwischen anderen Schneidpfaden, die ein oder mehrere von der Maschine vordefinierte Schneidpfade beinhalten, welche in dem softwarebasierten Steuersystem gespeichert sind, gelesen werden kann, wobei die Bergbaumaschine unter Verwendung eines automatischen Schneidzyklus in Übereinstimmung mit dem ausgewählten Schneidpfad betrieben werden kann.

20. Speichermedium nach Anspruch 19, wobei die Datendatei ein Wurzelelement umfasst, das ein Pfadelement beinhaltet, das durch mindestens eine eindeutige Schneidpfadkennung identifiziert ist, wobei das Pfadelement eine Anzahl von Punktelementen umfasst, die jeweils eine Position für eine Schneidtrommel der Bergbaumaschine, und einen Punktcode definieren, der einen Bewegungsmodus für einen Ausleger der Bergbaumaschine, an dem die Schneidtrommel montiert ist, definiert.

21. Speichermedium nach Anspruch 19 oder 20, wobei die Datendatei im XML-Format vorliegt.

## Revendications

1. Machine d'exploitation minière (100, 500) adaptée à l'extraction d'un matériau d'un gisement, comprenant :
une unité de traitement de données (110, 510) ; et
une unité de commande (120, 520) ;
**caractérisée en ce que** ladite unité de traitement de données est adaptée pour recevoir d'un support de stockage externe (130) un fichier de données (132) représentatif d'un chemin de coupe défini par l'utilisateur (114), et pour envoyer à l'unité de commande des données (112) correspondant à un chemin de coupe sélectionné parmi ledit chemin de coupe défini par l'utilisateur et un ou plusieurs chemins de coupe prédéfinis par la machine (118) ; et
dans laquelle ladite unité de commande est configurée pour commander le fonctionnement de ladite machine d'exploitation minière à l'aide d'un cycle de coupe automatique conformément au chemin de coupe sélectionné correspondant aux données reçues de l'unité de traitement de données ;
dans laquelle ladite unité de traitement de données ou ladite unité de commande est configurée pour convertir ledit fichier de données (132) en données (112) correspondant au chemin de coupe défini par l'utilisateur, les données étant lisibles par ladite unité de commande pour commander le fonctionnement de la machine d'exploitation minière.

2. Machine d'exploitation minière (200) selon la revendication 1, comprenant en outre :
une flèche (210) montée de manière pivotante à une première extrémité (211) au niveau d'un châssis (230) de ladite machine d'exploitation minière ; et
un tambour de coupe (220) monté de manière rotative à une seconde extrémité (212) de ladite flèche ;
dans laquelle un chemin de coupe (300) est défini dans ledit fichier de données par un nombre d'éléments de point (301a, 301b), dans laquelle chaque élément de point définit au moins une position pour ledit tambour de coupe et un mode de mouvement pour ladite flèche.

3. Machine d'exploitation minière selon la revendication 2, dans laquelle ledit chemin de coupe défini par l'utilisateur (300) défini dans ledit fichier de données comprend en outre au moins un point d'interpolation généré par ordinateur (331) situé entre un premier élément de point (301a) et un second élément de point (301b).

4. Machine d'exploitation minière selon la revendication 2 ou 3, dans laquelle ledit fichier de données (400) représentatif d'un chemin de coupe défini par l'utilisateur comprend un élément racine (410) incluant un élément de chemin (420) identifié par au moins un identifiant de chemin de coupe unique (421), dans laquelle ledit élément de chemin comprend ledit nombre d'éléments de point (430a-n), chacun définissant au moins ladite position (431a-n) pour ledit tambour de coupe et un code de point (432a-n) définissant ledit mode de mouvement.

5. Machine d'exploitation minière selon l'une quelconque des revendications 2-4, dans laquelle l'unité de commande est configurée pour régler au moins une vitesse et au moins une direction de déplacement pour ladite flèche sur la base desdites données reçues de l'unité de traitement de données.

6. Machine d'exploitation minière selon l'une quelconque des revendications 2-5, dans laquelle la machine d'exploitation minière est configurée pour fonctionner dans un intervalle de coupe (312) et dans un intervalle de profondeur de puisard (311), et dans laquelle lesdites positions pour le tambour de coupe, définissant le chemin de coupe, sont définies dans ledit fichier de données par rapport audit intervalle de coupe et audit intervalle de profondeur de puisard.

7. Machine d'exploitation minière selon l'une quelconque des revendications 2-6, dans laquelle lesdites positions sont définies dans ledit fichier de données en valeurs absolues par rapport à un composant stationnaire de la machine d'exploitation minière.

8. Machine d'exploitation minière selon l'une quelconque des revendications précédentes, comprenant en outre une unité d'entrée (530) adaptée pour recevoir une entrée utilisateur indiquant le chemin de coupe sélectionné.

9. Machine d'exploitation minière selon l'une quelconque des revendications précédentes, comprenant en outre une unité d'affichage (540) adaptée pour afficher une visualisation du chemin de coupe sélectionné.

10. Machine d'exploitation minière selon l'une quelconque des revendications précédentes, dans laquelle l'unité de traitement de données est adaptée pour stocker le chemin de coupe défini par l'utilisateur.

11. Machine d'exploitation minière selon l'une quelconque des revendications précédentes, dans laquelle ledit fichier de données est au format XML.

12. Procédé (6000, 7000) de commande du fonctionnement d'une machine d'exploitation minière (600, 700) adaptée à l'extraction d'un matériau d'un gisement, le procédé comprenant :
la fourniture (6100, 7100) à un utilisateur d'un programme informatique (621, 721) à installer dans un ordinateur client commandé par logiciel (620, 720), ledit programme informatique étant utilisable pour permettre à l'utilisateur de définir un chemin de coupe pour la machine d'exploitation minière ;
la permission (6200, 7200) donnée à l'utilisateur de définir un chemin de coupe pour la machine d'exploitation minière à l'aide dudit programme informatique ;
le stockage (6300, 7300) d'un fichier de données (631, 731) représentatif du chemin de coupe défini par l'utilisateur sur un support de stockage (630, 730) ;
l'importation (6400, 7400) dudit fichier de données depuis ledit support de stockage vers un système de commande basé sur un logiciel (610, 710) de la machine d'exploitation minière ;
la conversion dudit fichier de données en données (112) correspondant au chemin de coupe défini par l'utilisateur, les données étant lisibles par ledit système de commande pour commander le fonctionnement de la machine d'exploitation minière ;
la permission (6500, 7500) donnée à l'opérateur de sélectionner un chemin de coupe parmi le chemin de coupe défini par l'utilisateur et un ou plusieurs chemins de coupe prédéfinis par la machine (611, 711) stockés dans ledit système de commande basé sur un logiciel ; et
le fonctionnement (6600, 7600) de la machine d'exploitation minière à l'aide d'un cycle de coupe automatique conformément au chemin de coupe sélectionné.

13. Procédé selon la revendication 12, comprenant en outre le stockage (7410) du chemin de coupe importé sur ledit système de commande basé sur un logiciel.

14. Procédé selon l'une quelconque des revendications 12-13, dans lequel ladite machine d'exploitation minière comprend une flèche et un tambour de coupe, et dans lequel ledit chemin de coupe défini par l'utilisateur est défini dans ledit fichier de données par un nombre d'éléments de point, dans lequel chaque élément de point définit une position pour ledit tambour de coupe et un mode de mouvement pour ladite flèche.

15. Procédé selon la revendication 14, comprenant en outre la génération (7210) par le programme informatique d'au moins un point d'interpolation généré par ordinateur entre au moins un premier élément de point défini par l'utilisateur et au moins un second élément de point défini par l'utilisateur.

16. Procédé selon la revendication 14 ou 15, dans lequel ledit fichier de données (400, 631, 731) représentatif du chemin de coupe défini par l'utilisateur comprend un élément racine (410) incluant un élément de chemin (420) identifié par au moins un identifiant de chemin de coupe unique (421), dans lequel l'élément de chemin comprend ledit nombre d'éléments de point (430), chacun définissant au moins ladite position (431) pour le tambour de coupe et un code de point (432) définissant ledit mode de mouvement.

17. Procédé selon l'une quelconque des revendications 12-16, comprenant en outre l'affichage (7510) sur une unité d'affichage de la machine d'exploitation minière d'une visualisation du chemin de coupe sélectionné.

18. Procédé selon l'une quelconque des revendications 12-17, dans lequel ledit fichier de données (400, 631, 731) représentatif du chemin de coupe défini par l'utilisateur est au format XML.

19. Support de stockage (630, 730) contenant un fichier de données (400, 631, 731) représentatif d'un chemin de coupe défini par l'utilisateur pour faire fonctionner une machine d'exploitation minière, selon l'une quelconque des revendications 1 à 11, le fichier de données étant lisible par un système de commande basé sur un logiciel de ladite machine d'exploitation minière pour une conversion ultérieure du fichier de données dans le chemin de coupe défini par l'utilisateur et pour une sélection parmi d'autres chemins de coupe incluant un ou plusieurs chemins de coupe prédéfinis par la machine stockés dans ledit système de commande basé sur un logiciel, dans lequel ladite machine d'exploitation minière peut être utilisée à l'aide d'un cycle de coupe automatique conformément au chemin de coupe sélectionné.

20. Support de stockage selon la revendication 19, dans lequel ledit fichier de données comprend un élément racine incluant un élément de chemin identifié par au moins un identifiant de chemin de coupe unique, dans lequel l'élément de chemin comprend un nombre d'éléments de point, chacun définissant une position pour un tambour de coupe de la machine d'exploitation minière et un code de point définissant un mode de mouvement pour une flèche de la machine d'exploitation minière, sur laquelle ledit tambour de coupe est monté.

21. Support de stockage selon la revendication 19 ou 20, dans lequel ledit fichier de données est au format XML.
